# FASCICULE DE BREVET EUROPEEN

(11) **EP 1 435 154 B1**
(45) Date de publication et mention de la délivrance du brevet: **08.07.2009**
(21) Numéro de dépôt: 02800632.8
(22) Date de dépôt: 04.10.2002
(51) Int. Cl.: H04L 12/28

(54) **PLATE-FORME DE COMMUNICATION EMBARQUEE DANS UN VEHICULE**
KOMMUNIKATIONSPLATTFORM AN BORD EINES FAHRZEUGS
COMMUNICATION PLATFORM ONBOARD OF A VEHICLE

(30) Priorité: 08.10.2001 FR 0112912
(43) Date de publication de la demande: 07.07.2004
(73) Titulaire: FRANCE TELECOM, 75015 Paris (FR)
(72) Inventeur: DANET, Pierre-Yves, F-22700 LOUANNEC (FR); BOUE, Myriam, F-22700 PERROS GUIREC (FR); OUDEVILLE, Hugues, F-22730 TREGASTEL (FR)
(86) Numéro de dépôt international: PCT/FR2002/003389
(87) Numéro de publication internationale: WO 2003/032580

(56) Documents cités:
- WO-A-00/17021
- WO-A-01/26333

## Description

### DOMAINE TECHNIQUE

La présente invention se situe dans le domaine des télécommunications et se rapporte plus particulièrement à une plate-forme de communication embarquée dans un véhicule et destinée, d'une part, à permettre à un utilisateur localisé dans le véhicule d'accéder à partir du véhicule à des services ou données fournis dans un réseau domestique géré par un serveur domestique, et d'autre part, à permettre à un utilisateur éloigné du véhicule de contrôler et commander à distance les équipements d'un réseau véhicule.

L'invention concerne également un système et un procédé de mise en relation d'un utilisateur éloigné avec un serveur domestique installé dans un réseau domestique via une telle plate-forme embarquée.

L'invention concerne également un véhicule comportant une telle plate-forme.

### ETAT DE LA TECHNIQUE ANTERIEURE

Les équipements des véhicules récents sont reliés par bus électronique à un ordinateur central via des capteurs afin de contrôler en permanence les paramètres de fonctionnement du véhicule. Parmi les bus électroniques connus, citons le CAN ("Controller Area Network" en anglais), le VAN ("Vehicle Area Network" en anglais) ou encore le MOST ("Media Oriented System Transfert" en anglais). Ces bus constituent un réseau sur lequel peuvent transiter des messages ou des signaux. Ce réseau sera désigné dans la suite de la description par l'expression réseau véhicule.

Actuellement, pour contrôler à distance les paramètres de fonctionnement du véhicule, il est nécessaire de passer par un opérateur qui relève ces paramètres et qui les transmet à un utilisateur distant par des moyens classiques de communications. Par ailleurs, hormis le verrouillage et le déverrouillage des portières qui peuvent être effectués à faible distance au moyen d'une télécommande, il n'est pas possible pour un utilisateur de vérifier directement les paramètres de fonctionnement du véhicule ni de commander des équipements tel que le chauffage de l'habitacle, le dégivrage des vitres ou encore les équipements multimédia à partir de son domicile ou de son bureau par exemple. Il n'est pas non plus possible, avec les équipements actuels du véhicule, d'échanger directement des informations avec un réseau domestique pour contrôler et commander, à partir du véhicule, les équipements de ce réseau. En outre, les dispositifs de communications actuels ne permettent pas d'assurer une continuité de service lors du passage du véhicule à l'habitat et réciproquement. C'est le cas par exemple lorsqu'un utilisateur écoute une émission radiophonique ou regarde un programme multimédia à son domicile et souhaite que le dispositif multimédia équivalent du véhicule lui fournisse l'émission ou le programme multimédia initialisé au domicile à partir de l'instant de l'émission ou du programme atteint lorsqu'il quitte son domicile.

Le document WO 01/26333 décrit un système comprenant d'une part des serveurs centraux où sont stockées les données qui y sont transmises à partir des détecteurs présents dans des véhicules et d'autre part des ordinateurs distants qui se trouvent par exemple dans une station-service et qui peuvent accéder aux données stockées dans les serveurs. La liaison entre les serveurs, les détecteurs et les ordinateurs est effectuée par l'intermédiaire du réseau Internet.

Le document WO 00/17021 décrit un système de sécurité comprenant des détecteurs en liaison avec un téléphone portable. Dans le cas où les détecteurs détectent une situation anormale un utilisateur du système en est automatiquement informé au moyen du téléphone. Le système utilise le réseau GSM.

Le but de l'invention est de pallier les inconvénients cités ci-dessus au moyen d'une plate-forme embarquée dans le véhicule permettant à un utilisateur :
- d'accéder depuis le véhicule aux équipements et aux services d'un habitat ;
- d'accéder de façon distante à des équipements et des fonctionnalités du véhicule ;
- d'avoir une continuité de service lors du passage de l'habitat au véhicule et réciproquement.

### EXPOSÉ DE L'INVENTION

La plate-forme selon l'invention comporte :
- un module de communication destiné à assurer une liaison distante entre le réseau véhicule et le réseau domestique à travers un serveur réseau central ;
- un module de localisation destiné à déterminer la position du véhicule par rapport au réseau domestique ; et
- un module applicatif destiné à commander et à contrôler à distance le fonctionnement des équipements dudit véhicule, à récupérer les données dudit module de localisation et à envoyer au réseau domestique des commandes pour exécuter des services fournis dans ledit réseau domestique.

Selon une autre caractéristique de l'invention, ledit module applicatif comporte une interface homme-machine destinée à piloter les équipements du véhicule en fonction des paramètres courants de fonctionnement desdits équipements préalablement mémorisés dans ledit module applicatif.

Le serveur réseau central comporte une mémoire destinée à stocker les paramètres courants de fonctionnement des équipements du véhicule et du réseau domestique.

Ladite plate-forme comporte en outre un module de gestion d'alarme qui transmet des messages d'alarme sur au moins un terminal consultable pour l'utilisateur.

La plate-forme est reliée au réseau domestique via un serveur réseau central comportant les modules suivants :
- une interface comportant au moins un module de gestion des appels d'utilisateurs éloignés,
- un module de gestion des communications assurant l'authentification et la sécurisation de l'accès ainsi que l'aboutement de la communication entre l'utilisateur et le serveur domestique,
- un module frontal de communication qui opère la gestion des appels vers le serveur domestique,
- un module de réception d'alarmes en provenance du serveur domestique,
- et un module d'exploitation destiné à assurer la gestion et l'administration des paramètres de l'utilisateur.

Le serveur réseau central comporte en outre une mémoire destinée à stocker les paramètres courants de fonctionnement des modules de communication respectifs du véhicule et du serveur domestique de manière à assurer une continuité de service entre le véhicule et le réseau domestique.

La plate-forme embarquée est apte à récupérer lesdits paramètres de fonctionnement de la mémoire du serveur réseau central et à inscrire dans cette mémoire des paramètres d'état de fonctionnement du véhicule.

Chaque module de gestion des appels d'utilisateurs éloignés traite les différentes requêtes d'un utilisateur pour les présenter dans un protocole compréhensible par le module de gestion des communications.

Le module de gestion des communications comporte en outre des moyens de gestion des appels permettant d'allouer dynamiquement des modems en fonction de leur occupation et de reporter des établissements de liaison non prioritaires lorsque tous les modems sont utilisés.

Le module de gestion des communications assure l'authentification de l'utilisateur éloigné et la sécurité, et traduit les informations dans un protocole compréhensible par le serveur domestique.

Le module frontal de communication gère l'établissement et la rupture des communications entre ladite plate-forme et le serveur domestique.

Le serveur réseau central comporte des moyens de réception de courrier électronique et de diffusion vers plusieurs adresses pré-configurées.

L'utilisateur est connecté au serveur réseau central à travers un réseau externe pris parmi les réseaux suivants : réseau numérique à intégration de services, réseau xDSL, réseau GSM, réseau DCS 1800, réseau UMTS.

La mise en relation à distance de l'utilisateur avec le réseau domestique est réalisée par un système comportant une plate-forme reliée au serveur domestique à travers un serveur réseau central comprenant :
- une interface comportant au moins un module de gestion des appels d'utilisateurs éloignés,
- un module de gestion des communications assurant l'authentification et la sécurisation de l'accès ainsi que l'aboutement de la communication entre l'utilisateur et le serveur domestique,
- un module frontal de communication qui opère la gestion des appels vers le serveur domestique,
- un module de réception d'alarmes en provenance du serveur domestique, et
- un module d'exploitation destiné à assurer la gestion et l'administration des paramètres de l'utilisateur.

Cette mise en relation est obtenue par un procédé comportant les étapes suivantes :
dans le sens utilisateur - serveur domestique,
   - authentifier l'utilisateur,
   - envoyer une demande d'établissement de communication vers le serveur domestique,
   - traduire les informations échangées une fois la communication établie,
et dans le sens serveur domestique - utilisateur,
- traduire les informations échangées une fois la communication établie.

Le procédé comporte en outre dans le sens utilisateur vers serveur domestique les étapes suivantes :
- établir une communication entre la plate-forme et un dispositif serveur réseau central,
- à la réception de cet appel par le dispositif serveur réseau central, demander l'authentification de l'utilisateur,
- identifier les paramètres de cet utilisateur et son contexte personnel ;
- établir une communication avec le serveur domestique en fonction de l'occupation des lignes et de la priorité de l'appel,
- à la réception d'un appel par le serveur domestique, analyser le numéro de l'appelant et prendre la ligne si ce numéro correspond au numéro du dispositif serveur réseau central,
- lorsque la liaison est établie, établir une liaison bout à bout entre la plate-forme et le serveur domestique, au travers d'une fonction d'adaptation qui traduit les requêtes de l'utilisateur en des informations compréhensibles par le serveur domestique.

Le procédé comporte les étapes suivantes dans le sens serveur domestique vers le serveur réseau central :
- lorsqu'un capteur du réseau domestique détecte un problème, transmettre une demande de connexion au serveur domestique,
- établir une communication avec le dispositif serveur réseau central,
- à la réception cet appel, contrôler l'origine de l'appel par le serveur réseau central,
- accepter cet appel en raccrochant éventuellement une communication moins prioritaire si tous les modems sont occupés,
- déterminer des adresses vers lesquelles doit être diffusé le message d'alarme et transmission de ce message.

Lorsque la communication entre le serveur réseau central et le serveur domestique est établie, le procédé comporte les étapes suivantes:
- fournir une adresse du protocole Internet au serveur domestique,
- échanger des messages SMTP ("Service Mail Transport Protocole" en anglais) (dans le sens serveur domestique vers serveur réseau central) au travers d'une liaison au protocole PPP ("Point-to-Point Protocol" en anglais) ou de requêtes HTTP ("Hyper Text Transfert Protocol" en anglais) et FTP ("File Transfert Protocol" en anglais) (dans le sens serveur réseau central vers serveur domestique).

Dans le sens serveur réseau central - réseau domestique, les demandes portent sur trois types d'actions :
- la commande,
- la demande d'état,
- la configuration.

La commande consiste à envoyer une séquence HTTP permettant de désigner un équipement domestique de façon unique ainsi que le descriptif de la commande associée, le format de la séquence HTTP étant le suivant :

| URL | Commande | Numéro | Type | Information |
|---|---|---|---|---|
| | xxx_exe.htm | 0-255 | 0-31 | Valeur décimale |

avec :
- URL = adresse Internet du serveur domestique (12),
- commande = nom d'exécution de la commande,
- numéro = numéro d'ordre de déclaration de l'élément pour un type donné,
- type = valeur décimale attribuée par famille d'équipements domestiques,
- information = valeur décimale attribuée selon l'action.

La demande d'état consiste à envoyer selon le protocole FTP une commande GET du (ou des) fichier(s) du serveur domestique comportant l'état des différents équipements communicants du réseau local domestique, le format de la commande GET étant le suivant :

| URL | Commande FTP | Fichier |
|---|---|---|
| | GET | Chaîne de caractères |

avec :
- URL = adresse Internet du serveur domestique,
- commande = GET (protocole FTP),
- fichier = nom du (ou des) fichier(s) du serveur domestique comportant l'état des différents équipements communicants du réseau domestique.

La configuration consiste à envoyer selon le protocole FTP un ou plusieurs nouveaux fichiers de configuration, dont le format est le suivant :

| URL | Commande FTP | Fichier |
|---|---|---|
| | PUT | Chaîne de caractères |

avec :
- URL = adresse Internet du serveur domestique,
- commande = PUT (protocole FTP),
- fichier = nom du (ou des) fichier(s) de configuration du serveur domestique, intégrant en particulier les fonctions suivantes :
   - configuration TCP/IP,
   - configuration PPP,
   - configuration des équipements du réseau domestique,
   - configuration des scénarios,
   - configuration SMTP.

Selon l'invention, dans le sens serveur domestique - serveur réseau central, les demandes portent sur deux types d'actions :
- la notification d'évènements relatifs au réseau domestique,
- l'accusé de réception.

La notification consiste à envoyer par le protocole SMTP une séquence permettant de désigner un équipement domestique ainsi que le descriptif de la notification associée, le format de ladite séquence étant le suivant :

| @mail destinataire | sujet | date | heure | paramètre lié au sujet | N° de téléphone du réseau domestique | mot de passe | information |
|---|---|---|---|---|---|---|---|
| | | jj/mm/aaa | hh/mm/ss | | | | |

avec :
- sujet = sujet du message
   - Alarme (20 caractères)
   - Notification (20 caractères)
- paramètre = Chaîne de 20 caractères,
- numéro de téléphone du réseau domestique = numéro de téléphone relatif au serveur domestique, 10 chiffres,
- mot de passe = chaîne de 8 caractères,
- numéro = numéro d'ordre de déclaration de l'élément pour un type donné.

L'accusé de réception consiste à envoyer selon le protocole SMTP une séquence permettant de répondre en différé à une commande ou à une demande d'état préalable, le format de ladite séquence étant le suivant :

| @mail destinataire | Sujet | Date | Heure | Paramètre lié au sujet | N° de téléphone du réseau domestique | Mot de passe | type | N° | information |
|---|---|---|---|---|---|---|---|---|---|
| | | jj/mm/aaa | hh/mm/ss | | | | | 0-255 | Valeur décimale |

avec :
- sujet = sujet du message
   - accusé de réception,
- paramètre = chaîne de 20 caractères, désignant le nom de la commande,
- numéro de téléphone du réseau domestique = numéro de téléphone relatif au serveur domestique, 10 chiffres,
- mot de passe = chaîne de 8 caractères,
- numéro = numéro d'ordre de déclaration de l'élément pour un type donné,
- type : valeur décimale attribuée par famille d'équipements domestiques,
- information : valeur décimale attribuée selon l'état de l'équipement.

Un utilisateur éloigné du véhicule peut commander, à distance, des actions telles que par exemple des mises en marche ou des arrêts d'équipements du véhicule, le relevé de données de fonctionnement (niveau d'huile, de carburant, etc.).

A cet effet, l'utilisateur éloigné se connecte au serveur réseau central par un accès de type IP, un accès de type WAP ou un accès téléphonique via un serveur vocal.

Un avantage de l'invention provient du fait que le module de localisation de la plate-forme embarquée permet de commander des téléactions afin d'assurer la continuité de service lors du passage de l'habitat au véhicule ou l'inverse. Les téléactions consistent à allumer ou éteindre les équipements du véhicule ou du réseau domestique. En effet, les paramètres de fonctionnement des équipements du véhicule et les paramètres de service domestique sont stockés dans les mémoires du serveur réseau central de sorte que les équipements connectés à la plate-forme embarquée et les équipements connectés au réseau domestique puissent les lire via les modules de communication de la plate-forme ou du serveur domestique.

Les données de localisation peuvent également être utilisées pour commander des équipements du véhicule ou du domicile selon des paramètres prédéfinis. Par exemple, allumage de lumière, de chauffage, de dispositifs d'arrosage, etc..

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente schématiquement un système selon l'invention de mise en relation à distance d'un utilisateur avec un réseau domestique respectivement à partir d'un véhicule vers le réseau domestique et à partir d'un réseau domestique vers le véhicule ;
- la figure 2 illustre le fonctionnement du système de la figure 1,
- La figure 3 illustre le fonctionnement du procédé de l'invention pour le sens dispositif-serveur réseau central vers serveur domestique ; et
- la figure 4 illustre le fonctionnement du procédé de l'invention pour le sens serveur domestique vers le serveur réseau central.

### EXPOSÉ DÉTAILLÉ DE MODES DE RÉALISATION PARTICULIERS

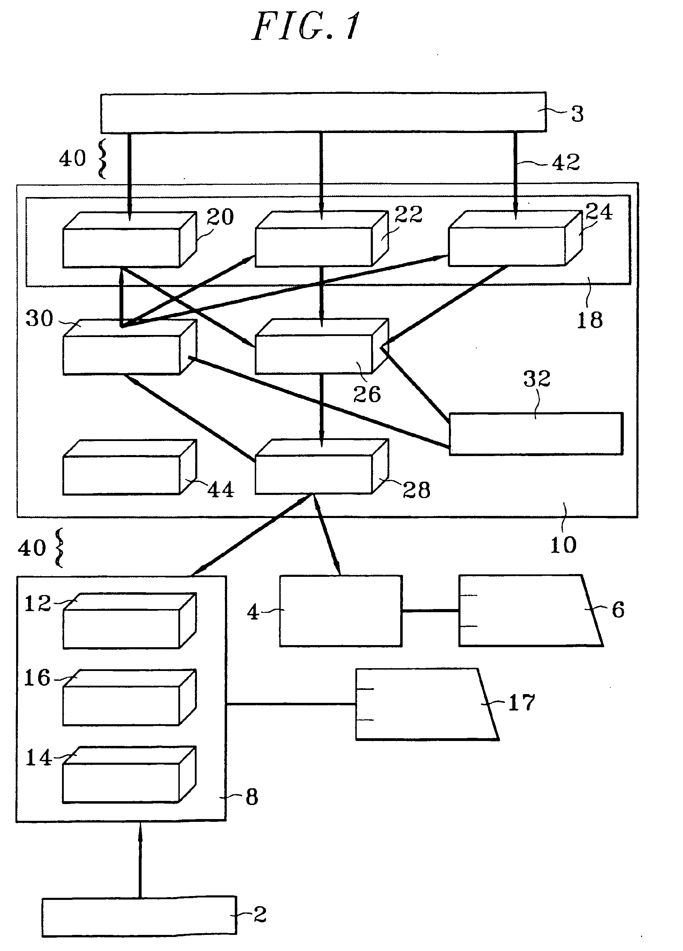

La figure 1 représente schématiquement un mode préféré de réalisation d'un système de mise en relation à distance d'un utilisateur 2, 3 avec un serveur domestique 4 d'un réseau domestique 6.

Le système comporte une plate-forme 8 embarquée dans un véhicule de l'utilisateur et reliée au serveur domestique 4 à travers un serveur réseau central 10. La plate-forme 8 comporte un module de communication 12 destiné à assurer une liaison distante entre le réseau véhicule 14 et le réseau domestique 6, un module de localisation 16 destiné à déterminer la position du véhicule par rapport au réseau domestique 6 et un module applicatif 17 comportant des logiciels destinés à commander et à contrôler le fonctionnement des équipements dudit véhicule.

Le réseau véhicule comporte un bus électronique sur lequel sont connectés les équipements du véhicule. Ce bus peut être du type CAN ("Controller Area Network" en anglais), VAN ("Vehicle Area Network" en anglais) ou MOST ("Media Oriented System Transport" en anglais) sur lequel peuvent transiter des messages ou des signaux. Un ordinateur central qui assure la fonction de serveur du réseau véhicule recueille les données des différents capteurs pour les transmettre, à la plate-forme de communication 8. L'ordinateur central recueille également les commandes reçues par la plate-forme de communication 8 et les transmet via le bus aux différents équipements du véhicule.

Dans ce mode de réalisation, le module de communication 12 comporte des moyens d'établissement et de réception d'appel constitués par exemple d'un modem GSM ("Global System for mobile Communication" en anglais) GPRS ("General Packet Radio Service" en anglais) ou UMTS ("Universal Mobile Telecommunication System" en anglais), un module de gestion des communications qui commande le module d'établissement d'appel en lui donnant les paramètres d'appel, principalement le numéro de l'utilisateur distant, les paramètres liés à l'appel tels que le secret d'appel, le débit dans le cas où le protocole de communication utilisé permettrait plusieurs débits possibles, ou en récupérant des paramètres tels que le numéro de l'appelant, dans le cas d'un appel entrant.

Ce module de gestion des communications est relié à l'IHM (interface Homme-Machine) du module applicatif de manière à établir un appel avec le serveur réseau central 10 pour lui envoyer une commande ou un message en appuyant par exemple sur un écran tactile ou sur un bouton de la plate-forme ou encore par reconnaissance vocale.

De même lors d'un appel entrant, ce module de gestion des communications retourne les paramètres de l'appel vers le module applicatif 17 qui détermine l'application à exécuter (gestion des alarmes, de la navigation, des actions sur le véhicule, des divertissements, etc.)

Le module de localisation 16 est du type GPS ("Global Positionning System" en anglais) et permet à la plate-forme 8 de déterminer à tout instant la position du véhicule par rapport à la position du réseau domestique 6.

Le module applicatif 16 comporte des logiciels permettant d'envoyer des commandes vers le serveur domestique 4 via le serveur réseau central 10 pour exécuter des services fournis dans le réseau domestique.

Le serveur réseau central 10 décrit dans la demande de brevet N° 01 05487 du 24 avril 2001 comprend :
- une interface multimodale 18 comportant trois modules de gestion des appels d'utilisateurs éloignés, qui sont dans cet exemple de réalisation, un serveur internet 20, un serveur WAP 22, et un serveur vocal 24,
- un module de gestion des communications 26 assurant l'authentification et la sécurisation de l'accès ainsi que l'aboutement de la communication entre l'utilisateur 2 et le serveur domestique 4,
- un module frontal de communication 28 qui opère la gestion des appels vers le serveur domestique 4,
- un module de réception des alarmes 30 en provenance du serveur domestique 4, et
- un module d'exploitation 32 relié aux modules de gestion de communication 26 et au module de gestion d'alarme 30 et destiné à assurer la gestion et l'administration des paramètres de l'utilisateur. Ce module d'exploitation 32 et permet en outre d'ajouter, de consulter, de modifier ou de supprimer des abonnés au serveur réseau central 10.

Le serveur réseau central 10 est raccordé, d'une part, à un premier réseau externe 40, et d'autre part à un deuxième réseau externe 42 au moyen du module frontal de communication 28 de manière à pouvoir établir des communications avec le serveur domestique 4.

Le premier réseau externe 40 peut être le réseau téléphonique commuté (RTC), qui offre un service d'identification de l'appelant qui permet au dispositif de l'invention de s'assurer de l'identité de l'appelant.

Ce réseau externe 40 peut également être pris parmi les réseaux suivants : réseau numérique à intégration de services (RNIS), réseau xDSL ("Digital Subscriber Line"), réseau GSM ("Global Service Mobile"), réseau DCS 1800, réseau UMTS ("Universal Mobile Telecommunication System").

Le deuxième réseau externe 42 est un réseau supportant une liaison IP et peut être pris parmi les réseaux suivants : réseau numérique à intégration de service (RNIS), réseau xDLS, réseau GSM, réseau DCS 1800 ou réseau UMTS.

En fonctionnement, l'utilisateur 2 et l'utilisateur 3 peuvent se connecter au serveur réseau central 10 respectivement depuis la plate-forme embarquée 8 ou depuis le réseau domestique au moyen de n'importe quel terminal, par exemple un terminal de type ordinateur personnel (PC) raccordé sur le réseau Internet (via le réseau RTC ou autre), ou depuis un mobile WAP (accédant au réseau Internet) ou depuis un téléphone (vocal) sans avoir à modifier ses paramètres d'accès.

Les modules 18 de gestion des appels utilisateurs traitent les différentes requêtes de l'utilisateur 2 pour les présenter dans un protocole compréhensible par le module de gestion des communications 26.

Le module de gestion des communications 26 assure l'authentification de l'utilisateur éloigné 2 et la sécurité, traduit les informations dans un protocole compréhensible par le serveur domestique 4.

Le module frontal de communication 28 gère l'établissement et la rupture des communications entre le serveur réseau central 10 et le serveur domestique 4. Ce module frontal 28 remplit une fonction de modem.

Le module d'exploitation 32 comporte une interface homme-machine (IHM) permettant l'exploitation du serveur réseau central 10.

Le serveur domestique 4 est relié à des capteurs et/ou des actionneurs permettant de contrôler des équipements du réseau domestique 6.

Le serveur réseau central 10 comprend des moyens de gestion des appels permettant d'allouer dynamiquement les modems des serveurs 20, 22, 24 en fonction de leur occupation et de reporter des établissements de liaison non prioritaires lorsque tous les modems sont utilisés.

Le dispositif de l'invention comprend des moyens logiciels ou moyens matériels permettant de gérer les conflits possibles entre les appels entrants et les appels sortants et des moyens permettant d'être configuré et supervisé via une interface homme-machine locale ou déportée.

Le serveur réseau central 10 comprend des moyens de réception de courrier électronique et de diffusion vers plusieurs adresses pré-configurées (SMS pour mobile, vocal ou ordinateur personnel) ainsi qu'une mémoire 44 destinée à stocker les paramètres de fonctionnement des équipements domestiques et des équipements du véhicule.

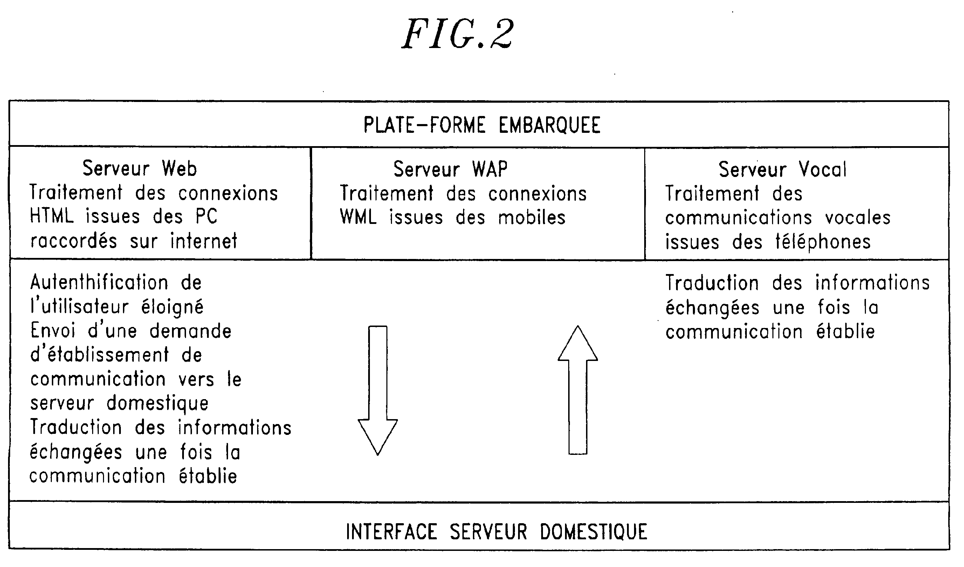

La figure 2 illustre le fonctionnement du système de la figure 1. Le serveur réseau central 10 permet la mise en relation d'un utilisateur éloigné 2 et d'un serveur domestique 4 au travers de plusieurs interfaces physiques.

Dans le sens utilisateur éloigné 2 vers serveur domestique 4, il y a successivement :
- authentification dudit utilisateur 2,
- envoi d'une demande d'établissement de communication vers ledit serveur domestique 4,
- traduction des informations échangées une fois la communication établie.

Dans l'autre sens il y a :
- traduction des informations échangées une fois la communication établie.

### Commande des équipements domestiques

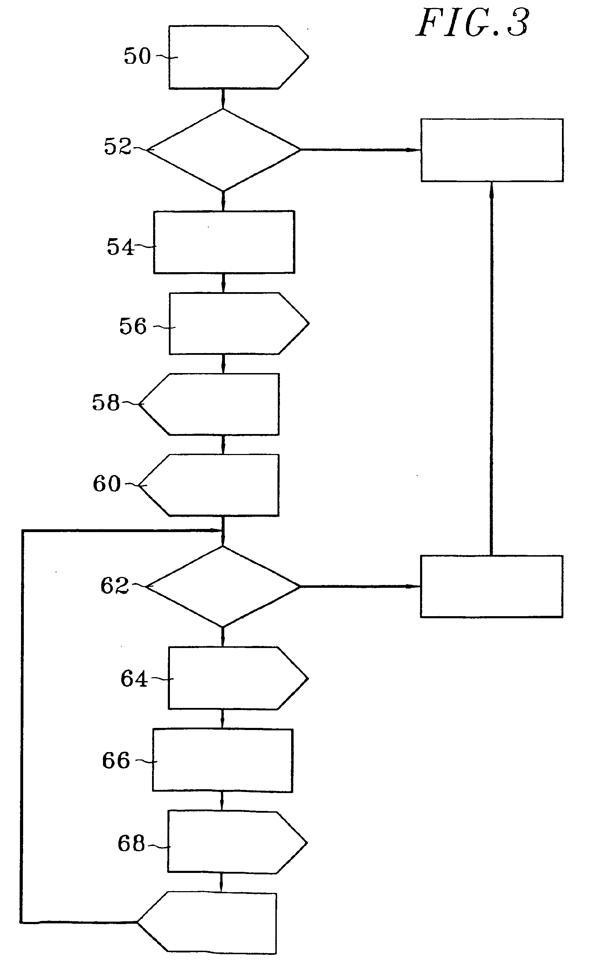

La figure 3 illustre le fonctionnement du procédé de mise en relation d'un utilisateur éloigné 2 et d'un serveur domestique 4 pour le sens serveur réseau central 10 vers serveur domestique 4.

Lorsqu'un utilisateur éloigné 2 souhaite communiquer avec un serveur domestique 4, il établit une communication (étape 50) avec le serveur réseau central 10 à l'aide d'un téléphone, d'un ordinateur personnel (PC) ou d'un mobile ou de la plate-forme 8. A la réception de cet appel, le serveur réseau central 10 lui demande de s'authentifier (étape 52) et en fonction de cette authentification, il identifie les paramètres de cet utilisateur (notamment le numéro de téléphone du serveur domestique) ainsi que son contexte personnel (équipements domestiques contrôlables, adresses de diffusion des alarmes, ...) (étape 54).

Une fois cette authentification effectuée par le module de gestion de communication 26, le serveur réseau central 10 passe le relais au module frontal de communication 28 qui engage l'établissement d'une communication avec le serveur domestique 4 en fonction de l'occupation des lignes et de la priorité de l'appel (étapes 56, 58, et 60).

A la réception d'un appel, le serveur domestique 4 analyse le numéro de l'appelant présenté sous le format V.23 (Transmission par modulation à cohérence de phase) et prend la ligne si ce numéro correspond au numéro du dispositif de l'invention (étape 62). Si le numéro de l'appelant reçu est différent de celui du dispositif de l'invention, il ne prend pas la ligne et ainsi n'occasionne pas d'interférence avec les autres services téléphoniques, comme décrit dans la demande de brevet WO 99/03229 qui décrit un dispositif interface entre une installation terminale d'abonné d'un réseau externe et un réseau interne.

Lorsque la liaison est établie, le module de gestion des communications 26 effectue un aboutement des liaisons entre l'utilisateur éloigné 2 et le serveur domestique 4. Cet aboutement est réalisé au travers d'une fonction d'adaptation qui traduit les requêtes de l'utilisateur en des informations compréhensibles par le serveur domestique 4 (étapes 64, 66 et 68).

Cette fonction d'adaptation fait partie intégrante du module de gestion des communications 26 et effectue la traduction bidirectionnelle en fonction des paramètres de l'utilisateur notamment en fonction de la langue utilisée et du format des informations reconnues par le serveur domestique.

### Réception d'une alarme en provenance du réseau domestique

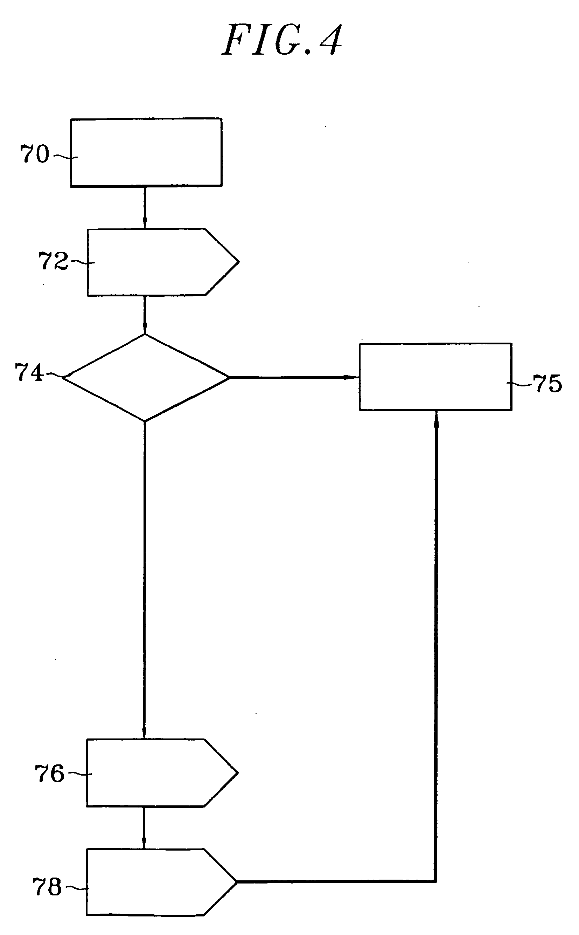

La figure 4 illustre le fonctionnement du procédé de l'invention pour le sens serveur domestique 4 vers le serveur réseau central 10.

Lorsqu'un capteur du réseau domestique 6 détecte un problème, il transmet une demande de connexion au serveur domestique 4 qui engage l'établissement d'une communication vers le serveur réseau central 10 (étapes 70 et 72).

A la réception de cet appel, le module frontal de communication 28 effectue un contrôle de l'origine de l'appel 74 et l'accepte en raccrochant éventuellement une communication moins prioritaire si tous les modems sont occupés (étape 75).

L'alarme est alors transmise au module de gestion des communications 26 qui détermine les adresses vers lesquelles doit être diffusé le message d'alarme et transmet ce message vers des serveurs déterminés (étapes 76 à 78). Ce message d'alarme peut être envoyé vers la plate-forme 8.

### Réception d'une alarme en provenance du réseau véhicule

Lorsqu'un capteur du réseau véhicule 14 détecte un problème, il transmet une demande de connexion à la plate-forme embarquée 8 qui établir une communication avec le serveur réseau central 10.

A la réception de cet appel, le module frontal de communication 28 effectue un contrôle de l'origine de l'appel et l'accepte en raccrochant éventuellement une communication moins prioritaire si tous les modems sont occupés.

L'alarme est alors transmise au module de gestion des communications 26 qui détermine les adresses vers lesquelles doit être diffusé le message d'alarme et transmet ce message vers des serveurs déterminés.

### Protocole d'échange entre le serveur réseau central 10 et le serveur domestique 4

Ce protocole d'échange entre le serveur réseau central 10 et le serveur domestique 4 permet d'échanger des informations de manière formelle. Il couvre le sens dispositif serveur réseau central vers serveur domestique et le sens inverse.

Il présente le format des échanges, dans les deux sens, qui sont portés par les couches du protocole Internet (HTTP, FTP ou SMTP). L'établissement de la communication entre le serveur réseau central 10 et le serveur domestique 4 et la gestion de cette communication ne font pas l'objet de la présente invention.

### Principe de fonctionnement

La communication entre le serveur réseau central 10 et le serveur domestique 4 étant établie, l'établissement de la connexion PPP s'effectue suivant un mode unique quelle que soit l'origine de la communication : Le serveur réseau central 10 joue le rôle de serveur PPP (DHCP) et fournit une adresse du protocole Internet au serveur domestique 4.

Une authentification PAP est réalisée.

Le dialogue entre le serveur réseau central 10 et le serveur domestique 4 s'effectue par échange de messages SMTP (dans le sens serveur domestique vers serveur réseau central) au travers d'une liaison au protocole Internet sur PPP ou de requêtes HTTP et FTP (dans le sens serveur réseau central vers serveur domestique).

### Sens serveur réseau central 10 vers serveur domestique 4

Dans le sens serveur réseau central 10 vers réseau domestique 4 les demandes portent sur trois types d'actions :
- la commande,
- la demande d'état,
- la configuration.

### La commande

La commande consiste à envoyer par le protocole HTTP une séquence permettant de désigner un équipement domestique de façon unique ainsi que le descriptif de la commande associée.

Son format est le suivant :

| URL | Commande | Numéro | Type | Information |
|---|---|---|---|---|
| | xxx_exe.htm | 0-255 | 0-31 | Valeur décimale |

avec :
- URL = adresse Internet du serveur domestique 4
- Commande = nom d'exécution de la commande généralement associé au nom du fichier contenant les équipements ou les fonctions désignés.

Exemple: scénario_exe.htm ;
- numéro = numéro d'ordre de déclaration de l'élément pour un type donné,
- type = valeur décimale attribuée par famille d'équipements domestiques (voir tableau récapitulatif ci-après),
- information = valeur décimale attribuée selon l'action (voir tableau récapitulatif ci-après).

Le séparateur utilisé entre les différents champs est le point-virgule. Un exemple de commande peut être le suivant : http://192. 168.112. 102/scenario_exe.htm ;3; 15 ; 1.

### La demande d'état

La demande d'état consiste à envoyer par le protocole FTP une commande GET du ou des fichiers du serveur domestique 4 comportant l'état des différents équipements communicants du réseau domestique.

Son format est le suivant :

| URL | Commande FTP | Fichier |
|---|---|---|
| | GET | Chaîne de caractères |

avec:
- URL = adresse Internet du serveur domestique.
- Commande = GET (protocole FTP).
- Fichier = nom du (ou des) fichier(s) du serveur domestique comportant l'état des différents équipements communicants du réseau domestique.

### La configuration

La configuration consiste à envoyer par le protocole FTP (PUT) un ou plusieurs nouveaux fichiers de configuration.

Son format est le suivant :

| URL | Commande FTP | Fichier |
|---|---|---|
| | PUT | Chaîne de caractères |

avec :
- URL = adresse Internet du serveur domestique.
- Commande = PUT (protocole FTP).
- Fichier = nom du (ou des) fichier(s) de configuration du serveur domestique concerné, intégrant en particulier les fonctions suivantes :
   - Configuration TCP/IP,
   - Configuration PPP,
   - Configuration des équipements du réseau domestique,
   - Configuration des scénarios,
   - Configuration SMTP (courriers électroniques).

### Sens serveur domestique 4 vers serveur réseau central 10

Dans le sens serveur domestique 4 vers le serveur réseau central 10 les demandes portent plus particulièrement sur deux types d'actions :
- La notification d'évènements relatifs au réseau local domestique,
- L'accusé de réception.

### La notification

La notification consiste à envoyer par le protocole SMTP une séquence permettant de désigner un équipement domestique ainsi que le descriptif de la notification associée.

Son format est le suivant :

| @mail destinataire | sujet | date | heure | paramètre lié au sujet | N° de téléphone du réseau domestique | mot de passe | information |
|---|---|---|---|---|---|---|---|
| | | jj/mm/aaa | hh/mm/ss | | | | |

avec :
- Sujet = Sujet du message
   - Alarme (20 caractères),
   - Notification (20 caractères).
- Paramètre = Chaîne de 20 caractères, par exemple localisation de l'alarme,
- Numéro de téléphone du réseau domestique = Numéro de téléphone relatif au serveur domestique, 10 chiffres,
- Mot de passe = chaîne de 8 caractères,
- Numéro = numéro d'ordre de déclaration de l'élément pour un type donné.

L'information peut aussi, suivant les applications, consister en un fichier de données (image de caméra par exemple) ou toute autre forme de présentation de données (relevés de compteurs, etc.).

### L'accusé de réception

L'accusé de réception consiste à envoyer par le protocole SMTP une séquence permettant de répondre en différé à une commande ou à une demande d'état préalable.

Son format est le suivant :

| @mail destinataire | Sujet | Date | Heure | Paramètre lié au sujet | N° de téléphone du réseau domestique | Mot de passe | type | N° | information |
|---|---|---|---|---|---|---|---|---|---|
| | | jj/mm/aaa | hh/mm/ss | | | | | 0-255 | Valeur décimale |

avec :
- Sujet = Sujet du message
   - Accusé de réception.
- Paramètre = Chaîne de 20 caractères, désignant le nom de la commande ou "Status".
- Numéro de téléphone du réseau domestique = numéro de téléphone relatif au serveur domestique, 10 chiffres.
- Mot de passe = chaîne de 8 caractères.
- Numéro = numéro d'ordre de déclaration de l'élément pour un type donné.
- Type = valeur décimale attribuée par famille d'équipements domestiques (voir le tableau récapitulatif).
- Information = valeur décimale attribuée selon l'état de l'équipement en question (voir le tableau récapitulatif).

L'information peut aussi, suivant les applications, consister en un fichier de données (image de caméra par exemple) ou toute autre forme de présentation de données (relevés de compteurs, etc.).

### Tableau récapitulatif

| Type |
|---|
| 0 : Caméra |
| 1 : Lampe |
| 2 : Volet roulant |
| 3 : HVAC (chauffage) |
| 4 : Ouverture (gâche) |
| 5 : Détecteur de fuite d'eau |
| 6 : Centrale d'alarme |
| 7 : Détecteur d'intrusion |
| 8 : Détecteur d'effraction |
| 9 : Détecteur de fumée |
| 10 : Détecteur d'incendie |
| 11 : Notification d'entrée/sortie |
| 12 : Magnétoscope/DVD |
| 13 : Chaîne Hi-Fi |
| 14 : Boite de livraison |
| 15 : Scénario |
| 16 : Compteur électrique (Compteur Bleu Electronique) |
| 17 : Compteur gaz |
| 18 : Compteur eau froide |
| 19 : Compteur eau chaude |
| 20 à 31 : Réservés |

Cette liste n'est pas exhaustive et pourra évoluer avec de nouvelles applications.

### Information

| Type O : | | |
|---|---|---|
| CAMERA | INACTIVE | => 0 |
| CAMERA | ACTIVE | => 1 |
| CAMERA | GAUCHE 5° | => 2 |
| CAMERA | DROITE 5° | => 3 |
| CAMERA | HAUT 5° | => 4 |
| CAMERA | BAS 5° | => 5 |
| CAMERA | ZOOM | => 6 |
| CAMERA | ELARGIS | => 7 |

| Type 1 : | | |
|---|---|---|
| LAMPE | ETEINTE | => 0 |
| LAMPE | ALLUMEE | => 1 |
| LAMPE | DIM | => 2 |
| LAMPE | INTERROGATION | => 3 |
| LAMPE | "Variable", ETEINTE | => 5 |
| LAMPE | "Variable", niveau 1 (33%) | => 6 |
| LAMPE | "Variable", niveau 2 (66%) | => 7 |
| LAMPE | "Variable", niveau 3 (100%) | => 8 |

| Type 2 : | | |
|---|---|---|
| VOLET | FERME | => 16 |
| VOLET | OUVERT | => 17 |
| VOLET | STOP | => 18 |

| Type 3 : | | |
|---|---|---|
| CONVECTEUR | CONFORT | => 32 |
| CONVECTEUR | ECO | => 33 |
| CONVECTEUR | HORS GEL | => 34 |
| CONVECTEUR | CONFORT REDUIT | => 35 |

| Type 4 : | | |
|---|---|---|
| LOCK: | INACTIF | =>0 |
| LOCK: | ACTIF | =>1 |

| Type 5 : | | |
|---|---|---|
| EAU: | FERME | => 0 |
| EAU: | OUVERT | => 1 |

| Type 6 : | | |
|---|---|---|
| CENTRALE: | INACTIF | => 0 |
| CENTRALE: | ACTIF | => 1 |
| CENTRALE: | HS | => 2 |

| Type 7 : | | |
|---|---|---|
| INTRUSION: | INACTIF | => 0 |
| INTRUSION: | ACTIF | => 1 |

| Type 8 : | | |
|---|---|---|
| EFFRACTION: | INACTIF | => 0 |
| EFFRACTION: | ACTIF | => 1 |

| Type 9 : | | |
|---|---|---|
| FUMEE: | INACTIF | => 0 |
| FUMEE: | ACTIF | => 1 |

| Type 10 : | | |
|---|---|---|
| INCENDIE: | INACTIF | => 0 |
| INCENDIE: | ACTIF | => 1 |

| Type 11 : | | |
|---|---|---|
| E/S: | INACTIF | => 0 |
| ENTREE: | ACTIF | => 1 |
| SORTIE: | ACTIF | => 2 |

| Type 12 : | | |
|---|---|---|
| DVD: | INACTIF | => 0 |
| DVD: | ACTIF | => 1 |
| DVD: | ENREGISTRE | => 2 |
| DVD: | LECTURE | => 3 |
| DVD: | CHAINE | => Numéro +3 |

| Type 13 : | | |
|---|---|---|
| HIFI: | ETEINTE | |
| HIFI: | ALLUMEE | => 1 |
| HIFI: | ENREGISTRE | => 2 |
| HIFI: | LECTURE | => 3 |
| HIFI: | CHAINE | => Numéro +3 |

| Type 14 : | | |
|---|---|---|
| e-Boîte: | VIDE | => 0 |
| e-Boîte: | PLEINE | => 1 |
| e-Boîte: | OUVERTURE | => 2 |
| e-Boîte: | FERMETURE | => 3 |
| (e-Boîte = boîte pour courrier électronique) | | |

| Type 15 : | | |
|---|---|---|
| SCENARIO: | INACTIF | => 0 |
| SCENARIO: | ACTIF | => 1 |

| Type 16 : | | |
|---|---|---|
| CBE | Mise hors service | => 0 |
| CBE | Mise en service | => 1 |
| CBE | Option Tarifaire heures creuses (HC) | => 21 |
| CBE | Option Tarifaire heures pleines (HP) | =>22 |
| CBE | JBLEU_HC | => 23 |
| CBE | JBLEU_HP | => 24 |
| CBE | JBLANC_HC | => 25 |
| CBE | JBLANC_HP | => 26 |
| CBE | JROUGE_HC | => 27 |
| CBE | JROUGE_HP | => 28 |

| Type 17 : | | |
|---|---|---|
| Compteur Gaz | Mise hors service | => 0 |
| Compteur Gaz | Mise en service | => 1 |
| Compteur Gaz | Relevé | => 2 |

| Type 18 : | |
|---|---|
| Compteur Eau Froide Hors en service | => 0 |
| Compteur Eau Froide Mise en service | => 1 |
| Compteur Eau Froide Relevé | => 2 |

| Type 19 : | |
|---|---|
| Compteur Eau Chaude Mise hors service | => 0 |
| Compteur Eau Chaude Mise en service | => 1 |
| Compteur Eau Chaude Relevé | => 2 |

### Glossaire

DCS 1800 : "Digital Communication System 1800 MHz
FTP :"File Transfer Protocol"
GSM : "Global System for Mobile Communication" (système global pour communication avec des mobiles)
HTTP :"Hyper Text Transfer Protocol"
IHM :Interface homme-machine
IP :"Internet Protocol"
ISP :"Internet Service Provider"
PAP : "Peer Authentification Protocol"
PPP : "Point to point Protocol"
RNIS :Réseau Numérique à Intégration de Services
RTC :Réseau Téléphonique Commuté
SMTP : "Service Mail Transfer Protocol
V.23 :Recommandation V23 livre bleu du CCITT : transmission par modulation à cohérence de phase
xDSL :"Digital Subscriber Line"
CAN : Control Area Network
VAN : Vehicle Area Network
MOST : Media Oriented System Transport.

## Revendications

1. Plate-forme de communication embarquée (8) dans un véhicule destinée à relier un réseau dudit véhicule à un réseau domestique (6) fixe, **caractérisée en ce qu'**elle comporte :
- un module de communication (12) destiné à assurer une liaison distante entre le réseau véhicule et le réseau domestique (6) à travers un serveur réseau central (10) ;
- un module de localisation (14) destiné à déterminer la position du véhicule par rapport au réseau domestique (6) ;
- et un module applicatif (16) destiné à commander et à contrôler à distance le fonctionnement des équipements dudit véhicule, à récupérer les données dudit module de localisation et à envoyer au réseau domestique (4) des commandes pour exécuter des services fournis dans ledit réseau domestique.

2. Plate-forme selon la revendication 1, **caractérisée en ce** ledit module applicatif (16) comporte une interface homme-machine destinée à piloter les équipements du véhicule en fonction des paramètres courants de fonctionnement desdits équipements préalablement mémorisés dans ledit module applicatif.

3. Plate-forme de communication selon la revendication 1, **caractérisée en ce que** le serveur réseau central (10) comporte une mémoire destinée à stocker les paramètres courants de fonctionnement des équipements du véhicule et du réseau domestique.

4. Plate-forme selon la revendication 3, **caractérisée en ce qu'**elle comporte en outre un module de gestion d'alarme qui transmet des messages d'alarme sur au moins un terminal consultable par l'utilisateur.

5. Véhicule **caractérisé en ce qu'**il comporte une plate-forme selon l'une des revendications 1 à 4.

## Claims

1. On-board communication platform (8) in a vehicle designed to link a network of said vehicle to a fixed domestic network (6), **characterized in that** it comprises:
- a communication module (12) designed to provide a remote link between the vehicle network and the domestic network (6) via a central network server (10) ;
- a locating module (14) designed to determine the position of the vehicle relative to the domestic network (6);
- and an application module (16) designed to control and monitor remotely the operation of the equipment of said vehicle, recover the data from said locating module and send to the domestic network (4) commands for executing services provided in said domestic network.

2. Platform according to Claim 1, **characterized in that** said application module (16) comprises a human-machine interface designed to drive the equipment of the vehicle according to current operating parameters of said equipment previously stored in said application module.

3. Communication platform according to Claim 1, **characterized in that** the central network server (10) comprises a memory designed to store the current operating parameters of the equipment of the vehicle and of the domestic network.

4. Platform according to Claim 3, **characterized in that** it also comprises an alarm management module which transmits alarm messages to at least one terminal that can be accessed by the user.

5. Vehicle, **characterized in that** it comprises a platform according to one of Claims 1 to 4.

## Patentansprüche

1. Fiommunikationsplattform (8) an Bord eines Fahrzeugs, die dazu bestimmt ist, ein Netzwerk des Fahrzeugs mit einem Heimfestnetz (6) zu verbinden, **dadurch gekennzeichnet, dass** sie aufweist:
- ein Kommunikationsmodul (12), das dazu bestimmt ist, eine Fernverbindung zwischen dem Fahrzeugnetzwerk und dem Heimnetzwerk (6) über einen zentralen Netzserver (10) zu gewährleisten;
- ein Lokalisierungsmodul (14), das dazu bestimmt ist, die Position des Fahrzeugs bezüglich des Heimnetzwerks (6) zu bestimmen;
- und ein Anwendungsmodul (16), das dazu bestimmt ist, aus der Ferne den Betrieb der Ausrüstungen des Fahrzeugs zu steuern und zu überwachen, die Daten vom Lokalisierungsmodul abzurufen und an das Heimnetzwerk (4) Befehle zu senden, um Dienste auszuführen, die im Heimnetzwerk bereitgestellt werden.

2. Plattform nach Anspruch 1, **dadurch gekennzeichnet, dass** das Anwendungsmodul (16) eine Mensch-Maschine-Schnittstelle aufweist, die dazu bestimmt ist, die Ausrüstungen des Fahrzeugs in Abhängigkeit von den laufenden Betriebsparametern der Ausrüstungen zu steuern, die vorher im Anwendungsmodul gespeichert wurden.

3. Kommunikationsplattform nach Anspruch 1, **dadurch gekennzeichnet, dass** der zentrale Netzserver (10) einen Speicher aufweist, der dazu bestimmt ist, die laufenden Betriebsparameter der Ausrüstungen des Fahrzeugs und des Heimnetzwerks zu speichern.

4. Plattform nach Anspruch 3, **dadurch gekennzeichnet, dass** sie außerdem ein Alarmverwaltungsmodul aufweist, das Alarmmitteilungen an mindestens ein vom Benutzer abfragbares Endgerät überträgt.

5. Fahrzeug, **dadurch gekennzeichnet, dass** es eine Plattform nach einem der Ansprüche 1 bis 4 aufweist.
